# EUROPÄISCHE PATENTSCHRIFT

(11) **EP 1 054 914 B1**
(45) Veröffentlichungstag und Bekanntmachung des Hinweises auf die Patenterteilung: **03.03.2004**
(21) Anmeldenummer: 99962247.5
(22) Anmeldetag: 09.12.1999
(51) Int. Cl.: C08F 110/02, C08F 4/643

(54) **ZWITTERIONISCHE, NEUTRALE ÜBERGANSMETALLVERBINDUNG**
ZWITTERIONIC, NEUTRAL TRANSITION METAL COMPOUND
COMPOSE ZWITTERIONIQUE NEUTRE D'UN METAL DE TRANSITION

(30) Priorität: 12.12.1998 DE 19857377; 28.01.1999 DE 19903306
(43) Veröffentlichungstag der Anmeldung: 29.11.2000
(73) Patentinhaber: Basell Polyolefine GmbH, 50389 Wesseling (DE)
(72) Erfinder: ERKER, Gerhard, D-48159 Münster (DE); KEHR, Gerald, D-48161 Münster (DE); SCHOTTEK, Jörg, D-60486 Frankfurt (DE); KRATZER, Roland, D-65830 Kriftel (DE)
(74) Vertreter: Seelert, Stefan, Dr.
(86) Internationale Anmeldenummer: PCT/EP1999/009682
(87) Internationale Veröffentlichungsnummer: WO 2000/035973

(56) Entgegenhaltungen:
- WO-A-98/01485
- TEMME, BODO ET AL: "Oxidative.eta.2-iminoacyl formation by reaction of amidozirconocene complexes with tris(pentafluorophenyl)borane" J. ORGANOMET. CHEM. (1995), 488(1-2), 177-82 , XP004024242

## Beschreibung

Die vorliegende Erfindung beschreibt eine zwitterionische, neutrale Übergangsmetallverbindung, die vorteilhaft zur Polymerisation von Olefinen eingesetzt werden kann. Hierbei kann auf die Verwendung von Aluminoxanen wie Methylaluminoxan (MAO) als Cokatalysator verzichtet und dennnoch eine hohe Katalysatoraktivität und gute Polymermorphologie erzielt werden.

Die Rolle von kationischen Komplexen bei der Ziegier-Natta-Polymerisation mit Metallocenen ist allgemein anerkannt (H.H. Brintzinger, D. Fischer, R. Mülhaupt, R. Rieger, R. Waymouth, Angew. Chem. 1995, 107, 1255-1283).

MAO als wirksamer Co-Katalysator hat den Nachteil, in hohem Überschuß eingesetzt werden zu müssen. Die Darstellung kationischer Alkylkomplexe eröffnet den Weg MAO freier Katalysatoren mit vergleichbarer Aktivität, wobei der Co-Katalysator nahezu stöchiometrisch eingesetzt werden kann.

Die Synthese von "Kationen-ähnlichen" Metallocen-Polymerisationskatalysatoren, wird im J. Am. Chem. Soc. 1991, 113, 3623 beschrieben. Ein Verfahren zur Herstellung von Salzen der allgemeinen Form LMX⁺ XA- nach dem oben beschriebenen Prinzip wird in EP 520 732 beansprucht.

EP 558158 beschreibt zwitterionische Katalysatorsysteme, die aus Metallocendialkyl-Verbindungen und Salzen der Form [R₃NH]⁺ [B(C₆H₅)₄]⁻ dargestellt werden. Die Umsetzung eines solchen Salzes mit z.B. Cp₂ZrMe₂ liefert durch Protolyse unter Methanabspaltung intermediär ein Zirkonocenmethyl-Kation. Dieses reagiert über C-H-Aktivierung zum Zwitterion Cp₂Zr⁺-(m-C₆H₄)-BPh₃⁻ ab. Das Zr-Atom ist dabei kovalent an ein Kohlenstoffatom des Phenylrings gebunden und wird über agostische Wasserstoffbindungen stabilisiert.

US 5, 348, 299 beschreibt zwitterionische Katalysatorsysteme, die aus Metallocendialkyl-Verbindungen und Salzen der Form [R₃NH]⁺ [B(C₆F₅)₄]⁻ durch Protolyse dargestellt werden. Die C-H-Aktivierung als Folgereaktion unterbleibt dabei.

EP 426 637 nutzt ein Verfahren in dem das Lewis-saure CPh₃⁺ Kation zur Abstraktion der Methylgruppe vom Metallzentrum eingesetzt wird. Als schwach koordinierendes Anion fungiert ebenfalls B(C₆F₅)₄-. Hierin werden auch Metallocene Cp₂MR₂ eingesetzt, bei denen die Alkylreste R zykisch miteinander verbundene sind, wie z.B. Cp₂Zr(2,3-dimethyl-1,3-butadien). Dabei entstehen nach Protonolyse Salze der Form [Cp₂Zr-R-RH]⁺[B(C₆F₅)₄]⁻.

EP 0687682 beschreibt spezielle zwitterionische Übergangsmetall-Katalysatorsysteme, die aus Metallocenbutadien-Verbindungen und einer Lewis-Säure, wie Tris(pentafluorophenyl)boran, dargestellt werden. Diese so dargestellten zwitterionischen Verbindungen zeigen Polymerisationsaktivitäten vergleichbar zu Metallocen-Verbindungen, die mit MAO aktiviert werden.

Die in EP 0687682 beschriebenen zwitterionischen verbindungen besitzen den Nachteil, daß sie bei der für die industrielle Nutzung von Metallocen-Katalysatoren geforderten Heterogenisierung bei der Dosierung des Katalysatorsystems in den Reaktor von der Trägeroberfläche abgelöst werden. Dies führt zu einer teilweise homogen verlaufenden Polymerisation. Außerdem führt die Heterogenisierung dieser Katalysatorsysteme zu einer geringeren Polymerisationsaktivität.

Es bestand nun die Aufgabe, eine Übergangsmetallverbindung zu finden, welche die Nachteile des Standes der Technik vermeidet. Es wurde nun gefunden, daß diese Aufgabe durch spezielle zwitterionische Übergangsmetall-verbindungen gelöst werden kann. Die vorliegende Erfindung betrifft daher einen Katalysator, ein Verfahren zur Herstellung eines Polyolefins und ferner eine zwitterionische Übergangsmetallverbindung der Formel I, 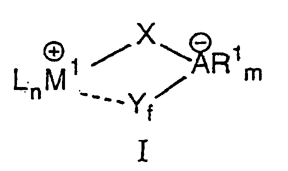 worin
- M: Titan, Zirconium oder Hafnium ist,
- n: gleich 2 oder 3 ist,
- L: ein bevorzugt substituierter Cyclopentadienylring oder ein bevorzugt substituerter Indenylring ist, wobei auch zwei oder mehrere Substituenten des Indenylrings zusammen ein Ringsystem bilden können und die Cyclopentadienyl- und Indenylringe können unverbrückt oder durch Z verbrückt sein mit
- Z: verbrückende Gruppen der Formel M²R²R³, worin M² Kohlenstoff, Silizium, Germanium oder Zinn ist und R² und R³ gleich oder verschieden C₁-C₁₀-Alkyl, C₆-C₁₄-Aryl oder Trimethylsilyl bedeuten,
- X: ein aromatischer oder nichtaromatischer Heterocyclus oder eine Heteroalkylgruppen ist,
- Y: ein C₁-C₄₀-Kohlenwasserstoffrest, der mit Halogenen halogeniert sein kann.
- f: gleich 0 oder 1
- A: ein Metall der Gruppe IIIa ist,
- R¹: gleich oder verschieden ist und eine perfluorierte Alkyl- bzw. Arylgruppe bedeutet und
- m: gleich 2 ist.

Die Metallatome M¹ und A sind über das Strukturelement X durch eine kovalente oder koordinative Bindung miteinander verbunden.

Für dem Fall, daß Y eine Allyleinheit ist, kann die Bindung von Y an das Metallatom M eine σ-Allyl- oder eine π-Allyl-Bindung sein, eine zusätzliche Verbrückung erfolgt über das Strukturelement X das die Metallatome M¹ und A durch eine kovalente oder koordinative Bindung miteinander verknüpft. Dieses Strukturelement X stellt ein Heteroatom, oder einen Heterocyclus dar. Ist X ein Doppelbindungen enthaltender Heterocyclus, kann die Bindung X von X an das Metallatom M eine koordinative Bindung sein.

Bevorzugte π-Liganden sind unsubstituierte oder substituierte Cyclopentadienylgruppen, die gleich oder verschieden sind und eine substituierte oder unsubstituierte Cyclopentadienyl-, Indenyloder Fluorenylgruppe bedeuten, wobei zwei Reste L über eine Verbrückung Z miteinander verbunden sein können.

Unter einem Heteroatom wird jedes Atom des Periodensystems der Elemente verstanden, mit Ausnahme von Kohlenwasserstoff und wasserstoff. Bevorzugt sind O, S und N.
Heterocyclen können unter anderem substituierte oder unsubstituierte Pyrrolidine, Pyrrole, Indole, Imidazole, Isoindole oder Benzimidazole sein.

Besonders bevorzugt sind Verbindungen der Formel I, worin
- M: Titan, Zirconium oder Hafnium ist,
- n: gleich 2 oder 3 ist,
- L: ein bevorzugt substituierter Cyclopentadienylring ist, insbesondere in 1, 3-, 1, 2-, 1, 2, 4- Stellung mit C₁-C₂₀-kohlenstoffhaltigen Gruppen, wie C₁-C₁₀-Alkyl oder C₆-C₂₀-Aryl oder ein bevorzugt substituierter Indenylring ist, insbesondere in 2-, 4- , 2, 4, 5-, 2, 4, 6-, 2, 4, 7- oder 2, 4, 5, 6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können. Diese Cyclopentadienyl- und Indenylringe können unverbrückt oder durch Z verbrückt sein. Besonders bevorzugt ist eine Verbrükkung von zwei Resten L in 1-Position,
- Z: verbrückende Gruppen der Formel M²R²R³ sind, worin M² Kohlenstoff, Silizium, Germanium oder Zinn ist und R² und R³ gleich oder verschieden C₁-C₁₀-Alkyl, C₆-C₁₄-Aryl oder Trimethylsilyl bedeuten,
- X: ein aromatischer oder nichtaromatischer Heterocyclus oder eine Heteroalkylgruppe ist,
- Y: ein C₁-C₄₀-Kohlenwasserstoffrest, der mit Halogenen wie Fluor, Chlor, Brom oder Jod halogeniert, bevorzugt perhalogeniert, sein kann, insbesondere eine halogenierte, insbesondere perhalogenierte C₁-C₃₀-Alkylgruppe wie Trifluormethyl-, Pentachlorethyl-, Heptafluorisopropyl oder Monofluorisobutyl oder eine halogenierte C₆-C₃₀-Arylgruppe wie Pentafluorphenyl-, 2,4,6-Trifluorphenyl, Heptachlornaphthyl-, Heptafluornaphthyl, Heptafluortolyl-, 3,5-bis(trifluormethyl)phenyl-, 2,4,6-tris(trifluormethyl)phenyl, Nonafluorbiphenyl- oder 4-(trifluormethyl)phenyl. Ebenfalls bevorzugt für Y sind Reste wie Phenyl-, Naphthyl-, Anisyl-, Methyl-, Ethyl-, Isopropyl-, Butyl-, Tolyl-, Biphenyl, 2,3-Dimethyl-phenyl oder ein Allylrest mit mindestens 3 Kohlenstoffatomen ist.
- A: eine Metall der Gruppe IIIa ist,
- R¹: ein C₁-C₄₀-Kohlenwasserstoffrest, der mit Halogenen wie Fluor, Chlor, Brom oder Jod halogeniert, bevorzugt perhalogeniert, sein kann, insbesondere eine halogenierte, insbesondere perhalogenierte C₁-C₃₀-Alkylgruppe wie Trifluormethyl-, Pentachlorethyl-, Heptafluorisopropyl oder Monofluorisobutyl oder eine halogenierte C₆-C₃₀-Arylgruppe wie Pentafluorphenyl-, 2,4,6-Trifluorphenyl, Heptachlornaphthyl-, Heptafluornaphthyl, Heptafluortolyl-, 3,5-bis(trifluormethyl)phenyl-, 2,4,6-tris (trifluormethyl)phenyl, Nonafluorbiphenyl- oder 4-(trifluormethyl)phenyl. Ebenfalls bevorzugt für R¹ sind Reste wie Phenyl-, Naphthyl-, Anisyl-, Methyl-, Ethyl-, Isopropyl-, Butyl-, Tolyl-, Biphenyl oder 2,3-Dimethyl-phenyl und
- m: gleich 2 ist.

Ganz besonders bevorzugt sind Verbindungen der Formel I, worin
- M: Zirconium ist,
- n: gleich 3 ist,
- L: gleich oder verschieden sind und eine substituierte Cyclopentadienylgruppe, wie 2-Methylcyclopentadienyl, 1, 3- Methylcyclopentadienyl, 2-n-Propylcyclopentadienyl oder Pentamethylcyclopentadienyl, oder Alkylgruppe wie Methyl bedeuten, wobei zwei Reste L über eine Verbrückung Z miteinander verbunden sind, wobei Z ein substituiertes Kohlenstoff- oder Siliciumatom ist,
- X: ein ungesättiger Heterocyclus mit N als Heteroatom ist, der koordinativ mit M verbunden ist,
- Y: mit f = 0 nicht vorhanden ist,
- A: ein Boratom ist,
- R¹: gleich ist und eine Pentafluorphenylgruppe bedeutet und
- m: gleich 2 ist.

Bevorzugt für den Fall f=1 ist eine Verbindung der Formel II 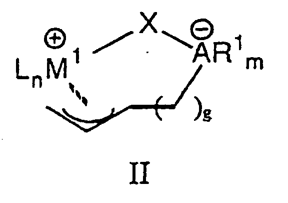 worin
- M: Titan, Zirconium oder Hafnium ist,
- n: gleich 2 ist,
- L: ein bevorzugt substituierter Cyclopentadienylring ist, insbesondere in 1, 3-, 1, 2-, 1, 2, 4- Stellung mit C₁-C₂₀-kohlenstoffhaltigen Gruppen, wie C₁-C₁₀-Alkyl oder C₆-C₂₀-Aryl oder ein bevorzugt substituierter Indenylring ist, insbesondere in 2-, 4- , 2, 4, 5-, 2, 4, 6-, 2, 4, 7- oder 2, 4, 5, 6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können. Diese Cyclopentadienyl- und Indenylringe können unverbrückt oder durch Z verbrückt sein. Besonders bevorzugt ist eine Verbrükkung von zwei Resten L in 1-Position.
- Z: verbrückende Gruppen der Formel M²R²R³ sind, worin M² Kohlenstoff, Silizium, Germanium oder Zinn ist und R² und R³ gleich oder verschieden C₁-C₁₀-Alkyl, C₆-C₁₄-Aryl oder Trimethylsilyl bedeuten.
- X: ein aromatischer oder nichtaromatischer Heterocyclus, eine Heteroalkylgruppen sein kann. X kann außerdem eine drei bis fünfgliedrige Alkylkette bilden, die gesättigt oder ungesättigt ist
- Y: eine Formel 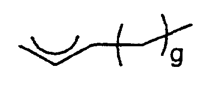 ist
- g: eine ganze Zahl 0 bis 37 ist, wobei einzelne Wasserstoffatome auch durch Alkylgruppen substituiert sein können,
- A: eine Metall der Gruppe IIIa ist,
- R¹: gleich oder verschieden ist und eine perfluorierte Alkyl- bzw. Arylgruppe bedeutet und
- m: gleich 2 ist.

Ganz besonders bevorzugt sind Verbindungen der Formel II, worin
- M: Zirconium ist,
- n: gleich 3 ist,
- L: gleich oder verschieden sind und eine substituierte Cyclopentadienylgruppe, wie 2-Methylcyclopentadienyl, 1, 3- Methylcyclopentadienyl, 2-n-Propylcyclopentadienyl oder Penta-methylcyclopentadienyl, oder Alkylgruppe wie Methyl bedeuten, wobei zwei Reste L über eine Verbrückung Z miteinander verbunden sind, wobei Z ein substituiertes Kohlenstoff- oder Siliciumatom ist,
- X: ein ungesättiger Heterocyclus mit N als Heteroatom ist, der koordinativ mit M verbunden ist,
- g: eine gesättigte oder ungesättigte Alkylkette mit g = 1 ist, deren Wasserstoffatome auch durch Alkylgruppen substituiert sein können,
- A: ein Boratom ist,
- R¹: gleich ist und eine Pentafluorphenylgruppe bedeutet und
- m: gleich 3 ist.

Beispiele für erfindungsgemäße Verbindungen der Formel I sind:
Bis(cyclopentadienyl)methylzirconiummethylbis(pentafluorophenyl)pyrrolylborat
Bis(methylcyclopentadienyl)methylzirconiummethylbis(pentafluorophenyl)-pyrrolylborat
Bis(pentamethylcyclopentadienyl)methylzirconiummethylbis(pentafluorophenyl)-pyrrolylborat
Bis(n-butyl-cyclopentadienyl)methylzirconiummethylbis(pentafluorophenyl)-pyrrolylborat
Bis (indenyl)methylzirconiummethylbis(pentafluorophenyl)pyrrolylborat
Bis (2-methylindenyl)methylzirconiummethylbis(pentafluorophenyl)pyrrolylborat
Bis(2-methylbenzindenyl)methylzirconiummethylbis(pentafluorophenyl)pyrrolylborat
(tert. butylamido)dimethyl(tetramethyl-η⁵-cyclopentadienyl)silanmethyl-zirconiummethylbis(pentafluoro-phenyl)pyrrolylborat
Dimethylsilandiylbis(indenyl)methylzirconiummethylbis(pentafluorophenyl)-pyrrolylborat
Dimethylsilandiylbis(2-methylindenyl)methylzirconiummethylbis-(pentafluorophenyl)pyrrolylborat
Dimethylsilandiylbis(2-methylbenzindenyl)methylzirconiummethylbis (pentafluorophenyl)pyrrolylborat
Dimethylsilandiylbis(2-methyl-4-(1-naphtyl)-indenyl)methylzirconiummethylbis(pentafluorophenyl)-pyrrolylborat
Dimethylsilandiylbis(2-methyl-4-phenyl-indenyl)methylzirconiummethylbis(pentafluorophenyl)-pyrrolylborat
Dimethylsilandiylbis(2-ethyl-indenyl)methylzirconiummethylbis(pentafluorophenyl)pyrrolylborat
Dimethylsilandiylbis(2-ethyl-4-phenyl-indenyl)methylzirconiummethylbis(pentafluorophenyl)-pyrrolylborat
Dimethylsilandiylbis(2-methyl-4(4'-tert.-butyl-phenyl)-indenyl)methylzirconiummethylbis(pentafluoro-phenyl)pyrrolylborat
Dimethylsilandiylbis(2-methyl-4(4'-methyl-phenyl)-indenyl)methylzirconiummethylbis(pentafluoro-phenyl)pyrrolylborat
Dimethylsilandiylbis(2-methyl-4(4'-iso-propyl-phenyl)-indenyl)methylzirconiummethylbis(pentafluoro-phenyl) pyrrolylborat
Dimethylsilandiylbis(2-ethyl-4(4'-tert.-butyl-phenyl)-indenyl)methylzirconiummethylbis(pentafluoro-phenyl) pyrrolylborat
Dimethylsilandiylbis(2-ethyl-4(4'-hexyl-phenyl)-indenyl)methylzirconiummethylbis(pentafluoro-phenyl) pyrrolylborat
Dimethylsilandiylbis(2-n-propyl-4(4'-tert.-butyl-phenyl)-indenyl)methylzirconiummethylbis(pentafluoro-phenyl) pyrrolylborat
Dimethylsilandiylbis(2- n-propyl -4(4'-methyl-phenyl)-indenyl)methylzirconiummethylbis(pentafluoro-phenyl) pyrrolylborat
Dimethylsilandiylbis(2- n-butyl -4(4'-tert.-butyl-phenyl)-indenyl)methylzirconiummethylbis(pentafluoro-phenyl)pyrrolylborat
Dimethylsilandiylbis(2- n-butyl -4(4'-methyl-phenyl)-indenyl)methylzirconiummethylbis(pentafluoro-phenyl)pyrrolylborat
Dimethylsilandiylbis(2- n-hexyl -4(4'-tert.-butyl-phenyl)-indenyl)methylzirconiummethylbis(pentafluoro-phenyl)pyrrolylborat
Dimethylsilandiylbis(2-methyl-4, 5-benzo-indenyl)methylzirconiummethylbis(pentafluorophenyl)pyrrolyl-borat
Dimethylsilandiylbis(2-methyl-4,6 diisopropyl-indenyl)methylzirconiummethylbis(pentafluorophenyl) pyrrolylborat
Dimethylsilandiylbis(2, 4, 6 trimethyl-indenyl)methylzirconiummethylbis(pentafluorophenyl)pyrrolylborat
Methyl(phenyl)silandiylbis(2-methylindenyl)methylzirconiummethylbis(pentafluorophenyl)pyrrolylborat
Methyl (phenyl)silandiylbis(2-methylbenzindenyl)methylzirconiummethylbis(pentafluorophenyl)pyrrolyl-borat
Methyl (phenyl)silandiylbis(2-methyl-4-(1-naphtyl)-indenyl)methylzirconiummethylbis(pentafluorophenyl) -pyrrolylborat
Methyl (phenyl)silandiylbis(2-methyl-4-phenyl-indenyl)methylzirconiummethylbis(pentafluorophenyl)-pyrrolylborat
Methyl(phenyl)silandiylbis(2-methyl-4, 5-benzo-indenyl)methylzirconiummethylbis(pentafluorophenyl)-pyrrolylborat
Methyl(phenyl)silandiylbis(2-methyl-4,6 diisopropyl-indenyl)methylzirconiummethylbis(pentafluoro-phenyl) pyrrolylborat
Methyl(phenyl)silandiylbis(2, 4, 6 trimethyl-indenyl)methylzirconiummethylbis(pentafluorophenyl)-pyrrolylborat
Diphenylmethylen-(fluorenyl)(cyclopentadienyl) methylzirconiummethylbis(pentafluorophenyl)-pyrrolyl-borat
Dimethylmethylen-(fluorenyl)(cyclopentadienyl) methylzirconiummethylbis(pentafluorophenyl)-pyrrolyl-borat
Methylphenylmethylen-(fluorenyl)(cyclopentadienyl) methylzirconiummethylbis(pentafluorophenyl)-pyrrolylborat
Ethylenbis(2-methyl-4-phenyl-indenyl) methylzirconiummethylbis(pentafluorophenyl)pyrrolylborat
Ethylenbis(2-methyl-4,5 benzindenyl) methylzirconiummethylbis(pentafluorophenyl)pyrrolylborat
Ethylenbis(2-methyl-4,6 diisopropylindenyl) methylzirconiummethylbis(pentafluorophenyl)pyrrolylborat
1,6-{Bis[methylsilyl-bis(2-methyl-4-phenyl-indenyl) methylzirconiummethylbis(pentafluorophenyl)-pyrrolylborat}hexan
1,6-{Bis[methylsilyl-bis(2-ethyl-4-phenyl-indenyl) methylzirconiummethylbis(pentafluorophenyl)pyrrolyl-borat}hexan
1,6-{Bis[methylsilyl-bis(2-methyl-4-naphtylphenyl-indenyl) methylzirconiummethylbis(pentafluoro-phenyl)pyrrolylborat}hexan
1,6-{Bis[methylsilyl-bis(2-methyl-4,5benzo-indenyl) methylzirconiummethylbis(pentafluorophenyl)-pyrrolylborat}hexan
1,6-{Bis[methylsilyl(2-methyl-4-phenyl-indenyl)(2-methyl-indenyl methylzirconiummethylbis(pentafluoro-phenyl)pyrrolylborat}hexan
1,6-{Bis[methylsilyl-bis(2-methyl-4-phenyl-indenyl) methylzirconiummethylbis(pentafluorophenyl)-pyrrolylborat}ethan
1,6-{Bis[methylsilyl-bis(2-ethyl-4-phenyl-indenyl) methylzirconiummethylbis(pentafluorophenyl)pyrrolyl-borat}ethan
1,6-{Bis[methylsilyl-bis(2-methyl-4-naphtylphenyl-indenyl) methylzirconiummethylbis(pentafluoro-phenyl)pyrrolylborat}ethan
1,6-{Bis[methylsilyl-bis(2-methyl-4,5benzo-indenyl) methylzirconiummethylbis(pentafluorophenyl)-pyrrolylborat}ethan
1,6-{Bis[methylsilyl(2-methyl-4-phenyl-indenyl)(2-methyl-indenyl methylzirconiummethylbis(pentafluoro-phenyl)pyrrolylborat}ethan
Tri(cyclopentadienyl)zirconiummethylbis(pentafluorophenyl)pyrrolylborat
Tri(methylcyclopentadienyl)zirconiummethylbis(pentafluorophenyl)pyrrolylborat
Tri(pentamethylcyclopentadienyl)zirconiummethylbis(pentafluorophenyl)pyrrolylborat
Tri(n-butyl-cyclopentadienyl)zirconiummethylbis(pentafluorophenyl)pyrrolylborat

Weiterhin bevorzugt sind die entsprechenden Verbindungen in denen das Pyrrol durch Imidazole, Benzimidazole und Indole ersetzt wurde.
Dimethylsilandiylbis(2- n-butyl -4(4'-tert.-butyl-phenyl)-indenyl) zirconiumCH₂CHCHCH₂bis(pentafluoro-phenyl)pyrrolylborat
Dimethylsilandiylbis(2- n-butyl -4(4'-methyl-phenyl)-indenyl) zirconiumCH₂CHCHCH₂bis(pentafluoro-phenyl)pyrrolylborat
Dimethylsilandiylbis(2- n-butyl -4(4'-ethyl-phenyl)-indenyl) zirconiumCH₂CHCHCH₂bis(pentafluoro-phenyl)pyrrolylborat
Dimethylsilandiylbis(2- n-butyl -4(4'-n-propyl-phenyl)-indenyl) zirconiumCH₂CHCHCH₂bis(pentafluoro-phenyl)pyrrolylborat
Dimethylsilandiylbis(2- n-butyl -4(4'-iso-propyl-phenyl)-indenyl) zirconiumCH₂CHCHCH₂bis(pentafluoro-phenyl)pyrrolylborat
Dimethylsilandiylbis(2- n-butyl -4(4'-n-butyl-phenyl)-indenyl) zirconiumCH₂CHCHCH₂bis(pentafluoro-phenyl)pyrrolylborat
Dimethylsilandiylbis(2- n-butyl -4(4'-hexyl-phenyl)-indenyl) zirconiumCH₂CHCHCH₂bis(pentafluoro-phenyl)pyrrolylborat
Dimethylsilandiylbis(2- n-butyl -4(4'-sec-butyl-phenyl)-indenyl) zirconiumCH₂CHCHCH₂bis(pentafluoro-phenyl)pyrrolylborat
Dimethylsilandiylbis(2- n-hexyl -4 (4'-tert.-butyl-phenyl)-indenyl) zirconiumCH₂CHCHCH₂bis(pentafluoro-phenyl)pyrrolylborat
Dimethylsilandiylbis(2- n-hexyl -4(4'-methyl-phenyl)-indenyl) zirconiumCH₂CHCHCH₂bis(pentafluoro-phenyl)pyrrolylborat
Dimethylsilandiylbis(2- n-hexyl -4(4'-ethyl-phenyl)-indenyl) zirconiumCH₂CHCHCH₂bis(pentafluoro-phenyl)pyrrolylborat
Dimethylsilandiylbis(2- n-hexyl -4(4'-n-propyl-phenyl)-indenyl) zirconiumCH₂CHCHCH₂bis(pentafluoro-phenyl)pyrrolylborat
Dimethylsilandiylbis(2- n-hexyl -4(4'-iso-propyl-phenyl)-indenyl) zirconiumCH₂CHCHCH₂bis(penta-fluorophenyl)pyrrolylborat
Dimethylsilandiylbis(2- n-hexyl -4(4'-n-butyl-phenyl)-indenyl) zirconiumCH₂CHCHCH₂bis(pentafluoro-phenyl)pyrrolylborat
Dimethylsilandiylbis(2- n-hexyl -4(4'-hexyl-phenyl)-indenyl) zirconiumCH₂CHCHCH₂bis(pentafluoro-phenyl)pyrrolylborat
Dimethylsilandiylbis(2- n-hexyl -4(4'-sec-butyl-phenyl)-indenyl) zirconiumCH₂CHCHCH₂bis(pentafluoro-phenyl)pyrrolylborat
Dimethylsilandiylbis(2-methyl-4, 5-benzo-indenyl)zirconiumCH₂CHCHCH₂bis(pentafluorophenyl)-pyrrolylborat
Dimethylsilandiylbis(2-methyl-4,6 diisopropyl-indenyl)zirconiumCH₂CHCHCH₂bis(pentafluorophenyl) pyrrolylborat
Dimethylsilandiylbis(2, 4, 6 trimethyl-indenyl)zirconiumCH₂CHCHCH₂bis(pentafluorophenyl)pyrrolyl-borat
Dimethylsilandiylbis(2,5,6 trimethyl-indenyl)zirconiumCH₂CHCHCH₂bis(pentafluorophenyl)-pyrrolylborat
Dimethylsilandiylbis(2,4,7 trimethyl-indenyl)zirconiumCH₂CHCHCH₂bis(pentafluorophenyl)-pyrrolylborat
Dimethylsilandiylbis(2-methyl-5-isobutyl-indenyl)zirconiumCH₂CHCHCH₂bis(pentafluorophenyl)-pyrrolylborat
Dimethylsilandiylbis(2-methyl-5 t-butyl-indenyl)zirconiumCH₂CHCHCH₂bis(pentafluorophenyl)pyrrolyl-borat
Methyl(phenyl)silandiylbis(indenyl)zirconiumCH₂CHCHCH₂bis(pentafluorophenyl)-pyrrolylborat
Methyl(phenyl)silandiylbis(2-methylindenyl)zirconiumCH₂CHCHCH₂bis-(pentafluorophenyl)pyrrolylborat
Methyl(phenyl)silandiylbis (2-methylbenzindenyl)zirconiumCH₂CHCHCH₂bis-(pentafluorophenyl)-pyrrolylborat
Methyl(phenyl)silandiylbis(4-phenyl-indenyl)zirconiumCH₂CHCHCH₂bis-(pentafluorophenyl)pyrrolylborat
Methyl(phenyl)silandiylbis(4-naphtyl-indenyl)zirconiumCH₂CHCHCH₂bis-(pentafluorophenyl)-pyrrolylborat
Methyl(phenyl)silandiylbis(2-methyl-4-(1-naphtyl)-indenyl)zirconiumCH₂CHCHCH₂bis(pentafluoro-phenyl)pyrrolylborat
Methyl(phenyl)silandiylbis(2-methyl-4-(2-naphtyl)-indenyl)zirconiumCH₂CHCHCH₂bis(pentafluoro-phenyl)pyrrolylborat
Methyl(phenyl)silandiylbis(2-methyl-4-phenyl-indenyl)zirconiumCH₂CHCHCH₂bis(pentafluorophenyl)-pyrrolylborat
Methyl(phenyl)silandiylbis(2-methyl-4-t.butyl-indenyl)zirconiumCH₂CHCHCH₂bis(pentafluorophenyl)-pyrrolylborat
Methyl(phenyl)silandiylbis(2-methyl-4-isopropyl-indenyl)zirconiumCH₂CHCHCH₂bis(pentafluorophenyl)-pyrrolylborat
Methyl(phenyl)silandiylbis(2-methyl-4-(1-naphtyl)indenyl)zirconiumCH₂CHCHCH₂bis(pentafluoro-phenyl)pyrrolylborat
Methyl(phenyl)silandiylbis(2-methyl-4-ethyl-indenyl)zirconiumCH₂CHCHCH₂bis(pentafluorophenyl)-pyrrolylborat
Methyl(phenyl)silandiylbis(2-methyl-4-(acenaphtyl)-indenyl)zirconiumCH₂CHCHCH₂bis(pentafluoro-phenyl)pyrrolylborat
Methyl(phenyl)silandiylbis (2, 4 -dimethyl-indenyl)zirconiumCH₂CHCHCH₂bis(pentafluorophenyl)pyrrolyl-borat
Methyl(phenyl)silandiylbis(2-ethyl-indenyl)zirconiumCH₂CHCHCH₂bis(pentafluorophenyl)pyrrolylborat
Methyl(phenyl)silandiylbis(2-ethyl-4-ethyl-indenyl)zirconiumCH₂CHCHCH₂bis(pentafluorophenyl)-pyrrolylborat
Methyl(phenyl)silandiylbis(2-ethyl-4-phenyl-indenyl)zirconiumCH₂CHCHCH₂bis(pentafluorophenyl)-pyrrolylborat
Methyl(phenyl)silandiylbis(2-methyl-4, 5-benzo-indenyl)zirconiumCH₂CHCHCH₂bis(pentafluorophenyl)-pyrrolylborat
Methyl(phenyl)silandiylbis(2-methyl-4,6 diisopropyl-indenyl)zirconiumCH₂CHCHCH₂bis(pentafluoro-phenyl) pyrrolylborat
Methyl(phenyl)silandiylbis(2, 4, 6 trimethyl-indenyl)zirconiumCH₂CHCHCH₂bis(pentafluorophenyl)-pyrrolylborat
Methyl(phenyl)silandiylbis(2,5,6 trimethyl-indenyl)zirconiumCH₂CHCHCH₂bis(pentafluorophenyl)-pyrrolylborat
Methyl(phenyl)silandiylbis(2,4,7 trimethyl-indenyl)zirconiumCH₂CHCHCH₂bis(pentafluorophenyl)-pyrrolylborat
Methyl(phenyl)silandiylbis(2-methyl-5-isobutyl-indenyl)zirconiumCH₂CHCHCH₂bis(pentafluorophenyl)-pyrrolylborat
Methyl(phenyl)silandiylbis(2-methyl-5 t-butyl-indenyl)zirconiumCH₂CHCHCH₂bis(pentafluorophenyl)-pyrrolylborat
Diphenylmethylen-(fluorenyl) (cyclopentadienyl) zirconiumCH₂CHCHCH₂bis(pentafluorophenyl)-pyrrolyl-borat
Dimethylmethylen-(fluorenyl)(cyclopentadienyl) zirconiumCH₂CHCHCH₂bis(pentafluorophenyl)-pyrrolyl-borat
Methylphenylmethylen-(fluorenyl) (cyclopentadienyl) zirconiumCH₂CHCHCH₂bis(pentafluorophenyl)-pyrrolylborat
Dimethylsilandiyl(3-tert.butyl-cyclopentadienyl) (fuorenyl) zirconiumCH₂CHCHCH₂bis(pentafluorophenyl)-pyrrolylborat
Diphenylsilandiyl(3-(trimethyl)cyclopentadienyl)(fuorenyl) zirconiumCH₂CHCHCH₂bis(pentafluorophenyl)-pyrrolylborat
Ethylenbis(indenyl) zirconiumCH₂CHCHCH₂bis(pentafluorophenyl)pyrrolylborat
Ethylenbis(2-methyl-indenyl) zirconiumCH₂CHCHCH₂bis(pentafluorophenyl)pyrrolylborat
Ethylenbis(2-methyl-4-phenyl-indenyl) zirconiumCH₂CHCHCH₂bis(pentafluorophenyl)pyrrolylborat
Ethylenbis(2-methyl-4,5 benzindenyl) zirconiumCH₂CHCHCH₂bis(pentafluorophenyl)pyrrolylborat
Ethylenbis(2-methyl-4,6 diisopropylindenyl) zirconiumCH₂CHCHCH₂bis(pentafluorophenyl)pyrrolylborat
1,6-{Bis[methylsilyl-bis(2-methyl-4-phenyl-indenyl) zirconiumCH₂CHCHCH₂bis(pentafluorophenyl)-pyrrolylborat}hexan
1,6-{Bis[methylsilyl-bis(2-ethyl-4-phenyl-indenyl) zirconiumCH₂CHCHCH₂bis(pentafluorophenyl)pyrrolyl-borat}hexan
1,6-{Bis[methylsilyl-bis(2-methyl-4-naphtylphenyl-indenyl) zirconiumCH₂CHCHCH₂bis(pentafluoro-phenyl)pyrrolylborat}hexan
1,6-{Bis[methylsilyl-bis(2-methyl-4,5benzo-indenyl) zirconiumCH₂CHCHCH₂bis(pentafluorophenyl)-pyrrolylborat}hexan
1,6-{Bis[methylsilyl(2-methyl-4-phenyl-indenyl)(2-methyl-indenyl zirconiumCH₂CHCHCH₂bis(pentafluoro-phenyl)pyrrolylborat}hexan
1,6-{Bis[methylsilyl-bis(2-methyl-4-phenyl-indenyl) zirconiumCH₂CHCHCH₂bis(pentafluorophenyl)-pyrrolylborat}ethan
1,6-{Bis[methylsilyl-bis(2-ethyl-4-phenyl-indenyl) zirconiumCH₂CHCHCH₂bis(pentafluorophenyl)pyrrolyl-borat}ethan
1,6-{Bis[methylsilyl-bis(2-methyl-4-naphtylphenyl-indenyl) zirconiumCH₂CHCHCH₂bis(pentafluoro-phenyl)pyrrolylborat}ethan
1,6-{Bis[methylsilyl-bis(2-methyl-4,5benzo-indenyl) zirconiumCH₂CHCHCH₂bis(pentafluorophenyl)-pyrrolylborat}ethan
1,6-{Bis[methylsilyl(2-methyl-4-phenyl-indenyl)(2-methyl-indenyl zirconiumCH₂CHCHCH₂bis(penta-fluorophenyl)pyrrolylborat}ethan
Tri(cyclopentadienyl)zirconiummethylbis(pentafluorophenyl)pyrrolylborat
Tri(methylcyclopentadienyl)zirconiummethylbis(pentafluorophenyl)pyrrolylborat
Tri(pentamethylcyclopentadienyl)zirconiummethylbis(pentafluorophenyl)pyrrolylborat
Tri(n-butyl-cyclopentadienyl)zirconiummethylbis(pentafluorophenyl)pyrrolylborat

Weiterhin bevorzugt sind die entsprechenden Verbindungen in denen das Pyrrol durch Imidazole, Benzimidazole und Indole ersetzt wurde.
Dimethylsilandiyl(2-methyl-4-azapentalen)(2-methyl-4-(4'-tert-butylphenyl-indenyl) methylzirconiummethylbis(pentafluorophenyl)-pyrrolylborat
Dimethylsilandiyl(2-methyl-5-azapentalen)(2-methyl-4-(4'-tert-butylphenyl-indenyl) methylzirconiummethylbis(pentafluorophenyl)-pyrrolylborat
Dimethylsilandiyl(2-methyl-6-azapentalen)(2-methyl-4-(4'-tert-butylphenyl-indenyl) methylzirconiummethylbis(pentafluorophenyl)-pyrrolylborat
Dimethylsilandiyl(2-methyl-N-phenyl-4-azapentalen) (2-methyl-4-(4'-tert-butylphenyl-indenyl) methylzirconiummethylbis(pentafluorophenyl)-pyrrolylborat
Dimethylsilandiyl(2-methyl-N-phenyl-5-azapentalen) (2-methyl-4-(4'-tert-butylphenyl-indenyl) methylzirconiummethylbis(pentafluorophenyl)-pyrrolylborat
Dimethylsilandiyl(2-methyl-N-phenyl-6-azapentalen)(2-methyl-4-(4'-tert-butylphenyl-indenyl) methylzirconiummethylbis(pentafluorophenyl)-pyrrolylborat
Dimethylsilandiyl(2,5-dimethyl-4-azapentalen)(2-methyl-4-(4'-tert-butylphenyl-indenyl) methylzirconiummethylbis(pentafluorophenyl)-pyrrolylborat
Dimethylsilandiyl(2,5-dimethyl-6-azapentalen)(2-methyl-4-(4'-tert-butylphenyl-indenyl) methylzirconiummethylbis(pentafluorophenyl)-pyrrolylborat
Dimethylsilandiyl(2,5-dimethyl-N-phenyl-4-azapentalen) (2-methyl-4-(4'-tert-butylphenyl-indenyl) methylzirconiummethylbis(pentafluorophenyl)-pyrrolylborat
Dimethylsilandiyl(2,5-dimethyl-N-phenyl-6-azapentalen) (2-methyl-4-(4'-tert-butylphenyl-indenyl) methylzirconiummethylbis(pentafluorophenyl)-pyrrolylborat
Dimethylsilandiyl(2-methyl-4-thiapentalen) (2-methyl-4-(4'-tertbutylphenyl-indenyl)methylzirconiummethylbis(pentafluorophenyl)-pyrrolylborat
Dimethylsilandiyl(2-methyl-5-thiapentalen) (2-methyl-4-(4'-tertbutylphenyl-indenyl)methylzirconiummethylbis(pentafluorophenyl)-pyrrolylborat
Dimethylsilandiyl(2-methyl-6-thiapentalen)(2-methyl-4-(4'-tertbutylphenyl-indenyl)methylzirconiummethylbis(pentafluorophenyl)-pyrrolylborat
Dimethylsilandiyl(2,5-dimethyl-4-thiapentalen) (2-methyl-4-(4'-tert-butylphenyl-indenyl) methylzirconiummethylbis(pentafluorophenyl)-pyrrolylborat
Dimethylsilandiyl(2,5-dimethyl-6-thiapentalen)(2-methyl-4-(4'-tert-butylphenyl-indenyl) methylzirconiummethylbis(pentafluorophenyl)-pyrrolylborat
Dimethylsilandiyl(2-methyl-4-oxapentalen)(2-methyl-4-(4'-tert-butylphenyl-indenyl)methylzirconiummethylbis(pentafluorophenyl)-pyrrolylborat
Dimethylsilandiyl(2-methyl-5-oxapentalen)(2-methyl-4-(4'-tert-butylphenyl-indenyl)methylzirconiummethylbis(pentafluorophenyl)-pyrrolylborat
Dimethylsilandiyl(2-methyl-6-oxapentalen)(2-methyl-4-(4'-tert-butylphenyl-indenyl)methylzirconiummethylbis(pentafluorophenyl)-pyrrolylborat
Dimethylsilandiyl(2,5-dimethyl-4-oxapentalen)(2-methyl-4-(4'-tert-butylphenyl-indenyl) methylzirconiummethylbis(pentafluorophenyl)-pyrrolylborat
Dimethylsilandiyl(2,5-dimethyl-6-oxapentalen)(2-methyl-4-(4'-tert-butylphenyl-indenyl) methylzirconiummethylbis(pentafluorophenyl)-pyrrolylborat
Weiterhin bevorzugt sind die entsprechenden Verbindungen in denen das Pyrrol durch Imidazole, Benzimidazole und Indole ersetzt wurde.

Die erfindungsgemäßen Verbindungen der Formel I und II können auch geträgert eingesetzt werden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃, um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Die vorliegende Erfindung betrifft auch ein Verfahren zur Herstellung eines Polyolefins durch Polymerisation einer oder mehrerer Olefine in Gegenwart der erfindungsgemäßen Katalysatorsysteme, enthaltend mindestens eine Übergangsmetallkomponente der Formel I. Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.

Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann außerdem ein Antistatikum zusammen mit oder getrennt von dem eingesetzten Katalysatorsystem in das Polymerisationssystem eindosiert werden.

Es können auch Mischungen von zwei oder mehr Übergangsmetall-Verbindungen der Formel I und/oder Formel II verwendet werden. Hierdurch können Polyolefine mit breiter oder multimodaler Molekulargewichtsverteilung erhalten werden.

Bei der Polymerisation können außerdem optional weitere cokatalytisch aktive Verbindungen zugegen sein.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (III)

(R AlO)ₙ (III)

verwendet.

Weitere geeignete Aluminoxane können z.B. cyclisch wie in Formel (IV) 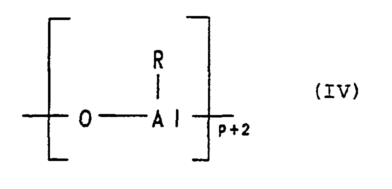 oder linear wie in Formel (V) 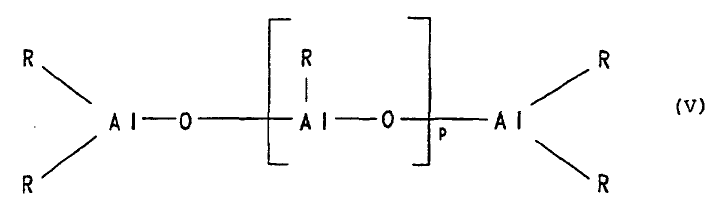 oder vom Cluster-Typ wie in Formel (VI) 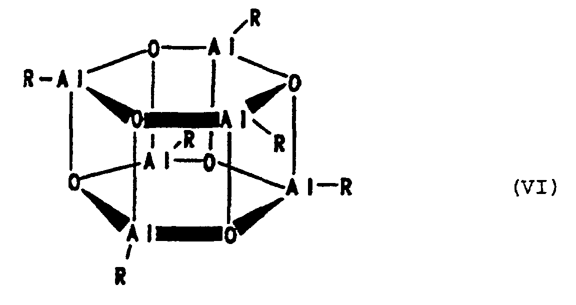 sein. Derartige Aluminoxane werden beispielsweise in JACS 117 (1995), 6465-74, Organometallics 13 (1994), 2957-2969, beschrieben.

Die Reste R in den Formeln (III), (IV), (V) und (VI) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl) boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻. Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltate(III),
Tri(butyl)ammoniumbis(undecahydrid-7,8-dicarbaundecaborat)ferrat(III)
von Bedeutung.

Mit Hilfe der Verbindungen der Formel I und II kann eine Vorpolymerisation erfolgen. Zur Vorpolymerisation wird bevorzugt das (oder eines der) in der Polymerisation eingesetzte(n) Olefin(e) verwendet.

Die nachfolgenden Beispiele dienen zur näheren Erläuterung der Erfindung

Allgemeine Angaben: Herstellung und Handhabung der Verbindungen erfolgten unter Ausschulß von Luft und Feuchtigkeit unter Argonschutz (Schlank-Technik). Alle benötigten Lösemittel wurden vor Gebrauch durch mehrstündiges Sieden übeer geeignete Trockenmittel und anschließende Destillation unter Argon absolutiert.

Die Synthese der Butadienkomplexe erfolgt nach G. Erker, K. Engel, Ch. Sarter in R. B. King, J. J. Eisch, Organometallic Synthesis, Vol 3, Academic Press, New York 1986, 529.

Die Darstellung von Pyrrolidinylbordichlorid erfolgt nach K. Niederzu, J. Am. Chem. Soc., 1959, 81, 5553. Die Synthese des (pentafluorophenyl)borfluorid-ether-Komplexes erfolgt nach M. Bochmann, Organometallics, 1997, 16, 4995. Die Synthese von Tris(η⁵-cyclopentadienyl)methylzirconium erfolgt nach Brackemeyer, G. Erker, R. Fröhlich, Organometallics 1997, 16, 531.

Die Verbindungen wurden mit ¹H-NMR, ¹³C-NMR und IR-Spektroskopie charakterisiert.

### Beispiel 1: Synthese von Bis(pentafluorophenyl)pyrrolylboran

Zu 140ml (72.8mmol) einer frisch dargestellten 0.52M Bis(pentafluorophenyl)borfluorid-Ether-Komplex/Ether Lösung wird bei -78°C vorsichtig eine Suspension von 5.316g (72.8mmol) Pyrrolyllithium in 50ml Ether portionsweise zugegeben. Die Reaktionsmischung wird langsam auf Raumtemperatur erwärmt und weitere 14 Stunden gerührt. Danach wechselt man das Lösungsmittel von Ether zu Pentan. Der Niederschlag wird abfiltriert und der Feststoff zweimal mit 20ml Pentan gewaschen. Die gelbliche, klare Pentanphase engt man solange ein bis die ersten Kristallisationskeime zu erkennen sind und bewahrt sie bei 8°C auf. Durch fraktionierte Kristallisation bei 8°C erhält man das Produkt als farblose Kristalle. Ausbeute: 15.6g (38.0mmol, 52%).
Elementaranalyse (%) für C₁₆H₄NBF₁₀ (Mᵣ = 411.0): ber.: C 46.76, H 0.98, N 3.41; gef.: C 46.58, 1.25, N 3.30.
1H-NMR (200.13 MHz, C₆D₆, 300 K): δ = 6.59 (m, 2H, H(2,5)), 6.23 (m, 2H, H(3,4)).
13C-NMR (75.47 MHz, C₆D₆, 300 K): δ = 147.1 (dm, 1J(F,C) = 256.7 Hz, ArFₒᵣₜₕₒ), 143.4 (dm, 1J(F,C) = 239.6 Hz, ArFₚₐᵣₐ), 138.1 (dm, 1J(F,C) = 254.3 Hz, ArFₘₑₜₐ), 127.7 (C(2,5)), 118.3 (C(3,4)), 110.0 (breit, Cᵢₚₛₒ).
11B-NMR (64.21 MHz, C₆D₆, 300K) : δ = 40.8 (ν½ = 480 Hz).
14N-NMR (14.47 MHz, C₆D₆, 300K) : δ = -176 (ν½ = 510 Hz).
19F-NMR (282.41 MHz, C₆D₆, 300K): δ = -130.5 (m, 2F, Fₘₑₜₐ), -148.4 (t, 1F, Fₚₐᵣₐ), -160.0 (m, 2F, Fₒᵣₜₕₒ).

### Beispiel 2: Synthese von Bis(η⁵-cyclopentadienyl)methylzirconiummethylbis(pentafluorophenyl)pyrrolylborat

0.133g (0.529mmol) Bis(η⁵-cyclopentadienyl)dimethylzirconium und 0.217g (0.529mmol) Bis(pentafluoro-phenyl)pyrrolylboran werden bei Raumtemperatur in 10ml Toluol gelöst und 5 Minuten gerührt. Anschließend entfernt man das Lösungsmittel im Vakuum. Der verbleibende Niederschlag wird mit 20ml Pentan aufgenommen und 10 Minuten gerührt. Nach dem Filtrieren der gelben Suspension und zweimaligem Waschen des Rückstandes mit je 5ml Pentan erhält man das Produkt als gelbes Pulver. Ausbeute: 0.217g (0.284mmol; 62%).
1H-NMR (200.13 MHz, C₆D₆, 300 K): δ = 7.22 (m, 2H, H(2,5)), 5.22 (m, 2H, H(3,4)), 5.15 (s, 10H, Cp), 1.11 (breit m, 3H, BMe), - 0.03 (s, 3H, ZrMe).
1H-NMR (599.9 MHz, C₇D₈, 298 K): δ = 7.15 (m, 2H, H(2,5)), 5.14 (m, 2H, H(3,4)), 5.14 (s, 10H, Cp), 0.99 (breit m, 3H, BMe), - 0.10 (s, 3H, ZrMe).
1H-NMR (599.9 MHz, C₇D₈, 253 K): δ = 7.20 (m, 2H, H(2,5)), 5.05 (m, 2H, H(3,4)), 5.04 (s, 10H, Cp), 1.10 (breit m, 3H, BMe), - 0.11 (s, 3H, ZrMe).
13C-NMR (75.47 MHz, C₆D₆, 300 K): δ = n.o. (ArFₒᵣₜₕₒ, ArFₘₑₜₐ, ArFₚₐᵣₐ), n.o. (Cᵢₚₛₒ), 139.0 (C(2,5)), 112.4 (Cp), 99.6 (C(3,4)), 37.5 (ZrMe), 10.9 (breit, BMe).
13C-NMR (125.9 MHz, C₇D₈, 298 K): δ = 148.6 (dm, 1J(F,C) = 248 Hz, ArFₒᵣₜₕₒ), 139.3 (dm, 1J(F,C) = 250 Hz, ArFₚₐᵣₐ), 139.2 (C(2,5)), 137.7 (dm, 1J(F,C) = 246 Hz, ArFₘₑₜₐ), n.o. (Cᵢₚₛₒ), 112.5 (Cp), 99.4 (C(3,4)), 37.3 (ZrMe) , 10.5 (breit, BMe).
13C-NMR (125.9 MHz, C₇D₈, 253 K): δ = 148.3 (dm, 1J(F,C) = 242 Hz, ArFₒᵣₜₕₒ), 139.1 (dm, 1J(F,C) = 239 Hz, ArFₚₐᵣₐ), 139.8 (C(2,5)), 137.5 (dm, 1J(F,C) = 248 Hz, ArFₘₑₜₐ), n.o. (Cᵢₚₛₒ), 112.1 (Cp), 98.4 (C(3,4)), 36.4 (ZrMe), 10.5 (breit, BMe).
11B-NMR (64.21 MHz, C₆D₆, 300K) : δ = -6.7 (ν½ = 192 Hz).
19F-NMR (282.41 MHz, C₆D₆, 300K,): δ = -132.5 (m, 2F, Fₘₑₜₐ),
-159.6 (t, 1F, Fₚₐᵣₐ), -163.9 (m, 2F, Fₒᵣₜₕₒ).

### Beispiel 3: Synthese von Tris(η⁵-cyclopentadienyl)zirconiummethylbis(pentafluorophenyl)pyrrolylborat

0.132g (0.438mmol) Tris(η⁵-cyclopentadienyl)methylzirconium und 0.180g (0.438mmol) Bis(pentafluoro-phenyl)pyrrolylboran werden bei Raumtemperatur in 10ml Toluol gelöst und 1.5 Stunden gerührt. Anschließend entfernt man das Lösungsmittel im Vakuum. Der verbleibende Niederschlag wird mit 30ml Pentan aufgenommen und 3 Stunden gerührt. Nach dem Filtrieren der gelben Suspension und zweimaligem Waschen des Rückstandes mit je 10ml Pentan erhält man das Produkt als gelbes Pulver. Ausbeute: 0.223g (0.313mmol; 71%).

Kristallisation aus Benzol liefert Einkristalle zur Röntgenstrukturanalyse.
1H-NMR (200.13 MHz, C₆D₆, 300 K): δ = 7.65 (m, 2H, H(2,5)), 5.58 (m, 2H, H(3,4)), 4.94 (s, 15H, Cp), 1.28 (breit m, 3H, BMe).
1H-NMR (599.2 MHz, C₆D₆, 298 K): δ = 7.65 (breit, 2H, H(2,5)), 5.58 (breit, 2H, H(3,4)), 4.94 (s, 15H, Cp), 1.27 (breit m, 3H, BMe).
13C-NMR (125.9 MHz, C₆D₆, 298 K) : δ = 148.7 (dm, 1J(F,C) = 236 Hz, ArFₒᵣₜₕₒ), 142.5 (breit C(2,5)), 139.3 (dm, 1J(F,C = 239 Hz, ArFₚₐᵣₐ), 137.6 (dm, 1J(F,C) = 249 Hz, ArFₘₑₜₐ), n.b. (Cᵢₚₛₒ), 113.5 (Cp), 113.4 (leicht verbreitert, C(3,4)), 10.9 (breit, BMe).
11B-NMR (64.21 MHz, C₆D₆, 300K) : δ = -6.8 (ν½ = 188 Hz).
19F-NMR (282.41 MHz, C₆D₆, 300K): δ = -132.4 (m, 2F, Fₘₑₜₐ), -159.9 (t, 1F, Fₚₐᵣₐ), -164.1 (m, 2F, Fₒᵣₜₕₒ).

### Beispiel 4: Synthese von Bis(η⁵-cyclopentadienyl)zirconiumCH₂CHCHCH₂bis(pentafluorophenyl)pyrrolylborat

0.120g (0.436mmol) (s-cis/s-trans-η⁴-Butadien)bis(η⁵-cyclopentadienyl)zirconium und 0.179g (0.436mmol) Bis (pentafluorophenyl)pyrrolylboran werden bei Raumtemperatur in 10ml Toluol gelöst und 1 Stunde gerührt. Anschließend entfernt man das Lösungsmittel im Vakuum. Der verbleibende Niederschlag wird mit 30ml Pentan aufgenommen und 3 Stunden gerührt. Nach dem Filtrieren der gelben Suspension und zweimaligem Waschen des gelben Rückstandes mit je 10ml Pentan erhält man das Produkt als gelbes Pulver. Ausbeute: 0.195g (0.284mmol; 65%).
1H-NMR (599.2 MHz, CD₂Cl₂, 298K): δ = 7.63 (breit, 1H, H(α)), 7.22 (breit, 1H, H(β)), 6.46 (breit, 1H, H(β')), 5.89 (s, 5H, Cp'), 5.57 (breit, 1H, H(α')), 5.54 (ddd, 3J(H,H) = 16.0Hz 3J(H,H) = 12.7Hz 3J(H,H) = 8.0Hz, 1H, H(2)), 5.24 (s, 5H, Cp), 4.34 (dd, 3J(H,H) = 16.0Hz 3J(H,H) = 10.5Hz, 1H, H(3)), 2.71 (d, 2J(H,H) = 16.0Hz, 1H, H(4')), 2.60 (dd, 2J(H,H) = 4.9Hz 3J(H,H) = 8.0Hz, 1H, H(1')), 2.29 (dd, 2J(H,H) = 16.0Hz, 3J(H,H) = 10.5Hz, 1H, H(4)), 1.90 (dd, 2J(H,H) = 4.9Hz 3J(H,H) = 12.7Hz, 1H, H(1)).
13C-NMR (150.7 MHz, CD₂Cl₂, 298K): δ = 147.4 (breit, C(α')), 133.1 (breit, C(α)),120.8 (C(2)), 114.0 (C(3)), 110.5 (Cp), 108.0
(Cp'), 95.0 (breit, C(β)), 47.8 (C(1)), 28.3 (breit, C(4)).
13C-NMR (150.7 MHz, CD₂Cl₂, 213K): δ = 147.0 (dm, 1J(F,C) = 232 Hz, ArFₒᵣₜₕₒ), 144.1 (C(α')), 137.8 (dm, 1J(F,C) = 240 Hz, ArFₚₐᵣₐ), 136.5 (dm, 1J(F,C) = 248 Hz, ArFₘₑₜₐ), 133.2 (C(α)), 121.0 (C(2)), 112.9 (breit, Cᵢₚₛₒ), 110.0 (C(3)), 109.8 (Cp), 109.4 (C(β')), 107.1 (Cp'), 92.1 (C(β)), 47.0 (C(1)), 26.6 (breit, C(4)).
11B-NMR (64.21 MHz, C₆D₆, 300K) : δ = -7.3 (ν½ = 185 Hz).
19F-NMR (282.41 MHz, C₇D₈, 300K): δ = -131.2 (m, 2F, Fₘₑₜₐ), -133.4 (m, 2F, Fₘₑₜₐ), -158.7 (t, 1F, Fₚₐᵣₐ), -160.0 (t, 1F, Fₚₐᵣₐ), -163.4 (m, 2F, Fₒᵣₜₕₒ), -164.0 (m, 2F, Fₒᵣₜₕₒ).

### Beispiel 5: Homogene Polymersisation von Ethen mit Bis(η⁵-cyclopentadie-nyl)methylzirconiummethylbis(penta-fluorophenyl)pyrrolylborat

16 mg (0.06 mmol) Bis(η⁵-cyclopentadienyl)dimethylzirconium und 26 mg (0.06 mmol) Bis(pentafluoro-phenyl)pyrrolylboran werden bei Raumtemperatur in 10 ml Toluol gelöst, mit 3.5 ml TIBA versetzt und 10 Minuten nachgerührt. Anschließend wird diese Lösung zur Polymerisation in einen 300 ml Polymerisationsautoklav (Parr 4560) gefüllt. Es wird bei 25 °C und einem Ethen-Druck von 10 bar 60 Minuten polymerisiert. Das Polymer wird im Vakuumtrockenschrank getrocknet. Es resultieren 12 g Polyethylen. Die Katalysatoraktivität beträgt 0.75 kg PE/g Metallocen x h.

### Beispiel 6: Homogene Polymerisiation von Ethen mit Bis(η⁵-cyclopentadienyl)zirconiumCH₂CHCHCH₂bis-(pentafluorophenyl)pyrrolylborat

14 mg (51µmol) (s-cis/s-trans-η⁴-butadien)bis(η⁵-cyclopentadienyl)zirconium werden mit 21 mg (51µmol) bis(pentafluorophenyl)pyrrolylboran in 15 ml Toluol umgesetzt und mit 5 ml TIBA versetzt. Es wird 15 Minuten nachgerührt. Anschließend wird diese Lösung zur Polymerisation in einen 1.5 dm³ Rührreaktor gefüllt. Es wird bei Raumtempertur und einem Ethen-Druck von 35 bar 60 Minuten polymerisiert. Das Polymer wird im Vakuumtrockenschrank getrocknet. Es resultieren 16 g Polyethylen. Die Katalysatoraktivität beträgt 1.14 kg PE/g Metallocen x h.

### Beispiel 7: Homogene Polymerisiation von Propen mit Bis(η⁵-cyclopentadienyl)zirconiumCH₂CHCHCH₂bis-(pentafluorophenyl)pyrrolylborat

42 mg (153µmol) (s-cis/s-trans-η⁴-butadien)bis(η⁵-cyclopentadienyl)zirconium werden mit 63 mg (153µmol) bis(pentafluorophenyl)pyrrolylboran in 15 ml Toluol umgesetzt und 15 Minuten gerührt. Parallel dazu wurde ein trockener 21-Reaktor zunächst mit Stickstoff und anschließend mit Propylen gespült und mit 1,5 1 flüssigem Propylen befüllt. Dazu werden 5 ml TIBA (20% ig in Varsol) zugegeben und 15 Minuten gerührt. Anschließend wird die hergestellte Katalysatorlösung in den Reaktor gegeben. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 172 g Polypropylen. Die Katalysatoraktivität beträgt 4.1 kg PP/g Metallocen x h.

### Beispiel 8: Heterogene Polymerisiation von Propen mit Bis(η⁵-cyclopentadienyl)zirconiumCH₂CHCHCH₂bis-(pentafluorophenyl)pyrrolylborat

3 g SiO₂ (MS 3030, Fa. PQ, getrocknet bei 600°C im Argonstrom) wurden in 15 ml Toluol suspendiert und tropfenweise unter Rühren langsam mit einer Lösung von 147 mg (0.535 mmol) (s-cis/strans-η⁴-butadien)bis(η⁵-cyclopentadienyl)zirconium und 221 mg (0.535 mmol) bis(pentafluorophenyl)pyrrolyl-boran in 5 ml Toluol versetzt. Man ließ 1 h bei Raumtemperatur rühren und entfernte dann das Lösungsmittel im Ölpumpenvakuum bis zur Gewichtskonstanz. Zum Einschleusen in das Polymerisationssystem wurden 1 g des geträgerten Katalysators in 30 cm³ Exxsol resuspendiert.

### Polymerisation:

Parallel dazu wurde ein trockener 16-dm³-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 182 g Polypropylen-Pulver. Der Reaktor zeigte keine Beläge an Innenwand oder Rührer. Die Katalysatoraktivität betrug 3.7 kg PP/g Metallocen x h.

## Patentansprüche

1. Zwitterionische Übergangsmetallverbindung der Formel I 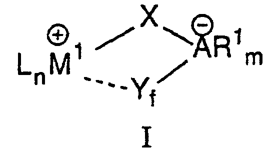 worin
M Titan, Zirconium oder Hafnium ist,
n gleich 2 oder 3 ist,
L ein bevorzugt substituierter Cyclopentadienylring oder ein bevorzugt substituierter Indenylring ist, wobei auch zwei oder mehrere Substituenten des Indenylrings zusammen ein Ringsystem bilden können und die Cyclopentadienyl- und Indenylringe können unverbrückt oder durch Z verbrückt sein, mit
Z verbrückende Gruppen der Formel M²R²R³, worin M² Kohlenstoff, Silizium, Germanium oder Zinn ist und R² und R3 gleich oder verschieden C₁-C₁₀-Alkyl, C₆-C₁₄-Aryl oder Trimethylsilyl bedeuten,
X ein aromatischer oder nichtaromatischer Heterocyclus oder eine Heteroalkylgruppen ist,
Y ein C₁-C₄₀-Kohlenwasserstoffrest, der mit Halogenen halogeniert sein kann,
f gleich 0 oder 1,
A ein Metall der Gruppe IIIa ist,
R¹ gleich oder verschieden ist und eine perfluorierte Alkyl- bzw. Arylgruppe bedeutet und
m gleich 2 ist.

2. Verbindung der Formel I nach Anspruch 1, worin
M Zirconium ist,
n gleich 3 ist
L gleich oder verschieden sind und eine substituierte Cyclopentadienylgruppe, wie 2-Methylcyclopentadienyl, 1, 3-Methylcyclopentadienyl, 2-n-Propylcyclopentadienyl oder Pentamethylcyclopentadienyl, oder Alkylgruppe wie Methyl bedeuten, wobei zwei Reste L über eine Verbrückung Z miteinander verbunden sind wobei Z ein substituiertes Kohlenstoff- oder Siliciumatom ist,
X ein ungesättigter Heterocyclus mit N als Heteroatom ist, der koordinativ mit M verbunden ist,
Y mit f = O nicht vorhanden ist,
A ein Boratom ist,
R¹ gleich ist und eine Pentafluorphenylgruppe bedeutet und
m gleich 2 ist.

3. Verbindung der Formel I nach den Ansprüchen 1 bis 2, worin.
Y eine Formel 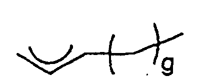
ist und
g eine ganze Zahl 0 bis 37 ist, wobei einzelne Wasserstoffatome auch durch Alkylgruppen substituiert sein können.

4. Katalysator enthaltend mindestens eine Verbindung gemäß einem der Ansprüche 1 bis 3, sowie einen Cokatalysator.

5. Verfahren zur Herstellung eines Polyolefins in Gegenwart einer Verbindung gemäß einem der Ansprüche 1 bis 3.

6. Verfahren zur Herstellung eines Polyolefins in Gegenwart eines Katalysators gemäß Anspruch 4.

7. Verwendung einer Verbindung gemäß einem der Ansprüche 1 bis 3 zur Olefinpolymerisation.

8. Verwendung eines Katalysators gemäß Anspruch 4 zur Olefinpolymerisation

## Claims

1. A zwitterionic transition metal compound of the formula I 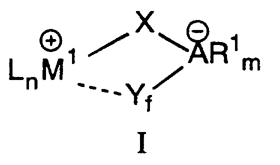 where
M is titanium, zirconium of hafnium,
n is 2 or 3,
L is a preferably substituted cyclopentadienyl ring or a preferably substituted indenyl ring, it also being possible for two or more substituents of the indenyl ring together to form a ring system and for the cyclopentadienyl and indenyl rings to be unbridged or bridged by Z, with
Z bridging groups of the formula M²R²R³, where M² is carbon, silicon, germanium or tin and R² and R³ are identical or different C₁-C₁₀-alkyl, C₆-C₁₄-aryl or trimethylsilyl,
X is an aromatic or nonaromatic heterocyclic structure or a heteroalkyl group,
Y is a C₁-C₄₀-hydrocarbon radical which may be halogenated with halogens,
f is 0 or 1,
A is a metal of group IIIa,
R¹ are identical or different and are each a perfluorinated alkyl or aryl group, and
m is 2.

2. A compound of the formula I as claimed in claim 1, wherein
M is zirconium,
n is 3,
L are identical or different and are each a substituted cyclopentadienyl group, such as 2-methylcyclopentadienyl, 1,3-methylcyclopentadienyl, 2-n-propylcyclopentadienyl or pentamethylcyclopentadienyl, or an alkyl group, such as methyl, where two radicals L are linked to one another via a bridge Z, Z being a substituted carbon or silicon atom,
X is an unsaturated heterocyclic structure with N as a heteroatom, which is bonded to M by a coordinate bond,
Y is not present when f = 0,
A is a boron atom,
R¹ are identical and are each a pentafluorophenyl group and
m is 2.

3. A compound of the formula I as claimed in claim 1 or 2, wherein
Y is of the formula 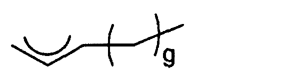 and
g is an integer from 0 to 37, it also being possible for individual hydrogen atoms to be substituted by alkyl groups.

4. A catalyst containing at least one compound as claimed in any of claims 1 to 3 and a cocatalyst.

5. A process for the preparation of a polyolefin in the presence of a compound as claimed in any of claims 1 to 3.

6. A process for the preparation of a polyolefin in the presence of a catalyst as claimed in claim 4.

7. The use of a compound as claimed in any of claims 1 to 3 for olefin polymerization.

8. The use of a catalyst as claimed in claim 4 for olefin polymerization.

## Revendications

1. Composé zwitterionique d'un métal de transition de formule I 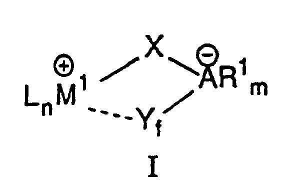 dans laquelle
M représente un atome de titane, de zirconium ou d'hafnium,
n vaut 2 ou 3,
L représente un cycle cyclopentadiényle de préférence substitué ou un cycle indényle de préférence substitué, deux substituants ou plus du cycle indényle pouvant conjointement former un système cyclique et les cycles cyclopentadiényle et indényle pouvant être non pontés ou pontés par l'intermédiaire de Z,
Z représente des groupes pontants de formule M²R²R³, dans laquelle M² représente un atome de carbone, de silicium, de germanium ou d'étain et R² et R³ sont identiques ou différents et représentent un groupe alkyle en C₁ à C₁₀, aryle en C₆ à C₁₄ ou triméthylsilyle,
X représente un hétérocycle aromatique ou non aromatique ou un groupe hétéroalkyle,
Y représente un groupe hydrocarboné en C₁ à C₄₀ qui peut être halogéné avec des atomes d'halogène,
f vaut 0 ou 1,
A représente un métal du groupe IIIa,
R¹ est identique ou différent et représente un groupe alkyle ou aryle perfluoré, et
m vaut 2.

2. Composé de formule I selon la revendication 1, dans lequel
M représente un atome de zirconium,
n vaut 3,
L sont identiques ou différents et représentent un groupe cyclopentadiényle substitué, tel qu'un groupe 2-méthylcyclopentadiényle, 1,3-méthylcyclopentadiényle, 2-n-propylcyclopentadiényle ou pentaméthylcyclopentadiényle, ou un groupe alkyle, tel qu'un groupe méthyle, deux groupes L étant liés l'un à l'autre par l'intermédiaire d'un pont Z, Z représentant un atome de carbone ou de silicium substitué,
X représente un hétérocycle insaturé avec N en tant qu'hétéroatome, qui est relié à M de manière coordinative,
Y n'est pas présent si f = 0
A représente un atome de bore,
R¹ est identique et représente un groupe pentafluorphényle, et
m vaut 2.

3. Composé de formule I selon les revendications 1 à 2, dans lequel
Y est de formule 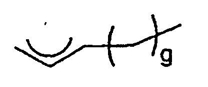
et
g représente un nombre entier de 0 à 37, des atomes d'hydrogène individuels pouvant être également substitués par des groupes alkyle.

4. Catalyseur contenant au moins un composé selon l'une quelconque des revendications 1 à 3 ainsi qu'un co-catalyseur.

5. Procédé de préparation d'une polyoléfine en présence d'un composé selon l'une quelconque des revendications 1 à 3.

6. Procédé de préparation d'une polyoléfine en présence d'un composé selon la revendication 4.

7. Utilisation d'un composé selon l'une quelconque des revendications 1 à 3 pour la polymérisation d'oléfines.

8. Utilisation d'un catalyseur selon la revendication 4 pour la polymérisation d'oléfines.
